# EUROPEAN PATENT APPLICATION

(11) **EP 1 435 564 A1**
(43) Date of publication of application: **07.07.2004**
(21) Application number: 02777816.6
(22) Date of filing: 09.10.2002
(51) Int. Cl.: G06F 3/12, B41J 2/525

(54) **PRINT SYSTEM AND COLOR PRINT METHOD**

(30) Priority: 10.10.2001 JP 2001313056
(71) Applicant: SEIKO EPSON CORPORATION, Shinjuku-ku, Tokyo 163-0811 (JP)
(72) Inventor: TAKABAYASHI, Nobuhisa c/o Seiko Epson Corporation, Suwa-shi, Nagano 392-8502 (JP); HAYAISHI, Ikuo c/o Seiko Epson Corporation, Suwa-shi, Nagano 392-8502 (JP)
(74) Representative: Sturt, Clifford Mark
(86) International application number: PCT/JP2002/010476
(87) International publication number: WO 2003/040907

(57) **Abstract**

Provided is color printing technology capable of accommodating variation(s) in printer color space(s). User(s) may place test pattern printout(s) 336 and test pattern master sheet(s) 337 next to each other on platen(s) of image scanner(s) 338, and may cause image scanner(s) 338 to scan such printout(s) 336 and master sheet(s) 337 in a single image scanning run. Captured image data output from image scanner(s) 338 may be acquired by print server machine(s) 2 and may be uploaded to center server machine(s) 8. Center server machine(s) 8 is or are such that any difference(s) in color(s) between test pattern printout(s) 336 and master sheet(s) 337 is or are detected based on such uploaded captured image data; furthermore, based on results of such detection, new printer ICC profile(s) is or are created which represents or represent the current color space(s) of printer(s) 3A, 3B being investigated, and corresponding printer ICC profile(s) within printer ICC profile database 330 is or are updated

## Description

### FIELD OF ART

The present invention relates generally to a printing system employing computer(s) and electronic printer(s), and pertains more particularly to a printing system suited to operations, from the taking of photograph(s) to the printing thereof, taking place at photo studio(s).

### BACKGROUND ART

As a result of improvements in digital camera and electronic printer performance, not only amateurs but also photographic industry professionals have begun using digital cameras and electronic printers. Amateurs as well as professionals typically make use of a simple system wherein an electronic printer is connected by way of a dedicated interface cable, LAN, or the like to a personal computer on which a photo retouching program is installed. Use of a sophisticated photo retouching program makes it possible to carry out a diverse variety of retouching and/or color correction operations on photographic images taken with a digital camera, and/or freely vary the size and/or resolution of such images. Inkjet printers are favorably used as such electronic printers, as they permit printing of high-quality full-color photographs that are as good as silver halide photographs.

### DISCLOSURE OF INVENTION

The typical system described above performs extremely well in terms of its ability to permit each individual photograph to be finished as necessary to achieve a quality print. However, at photo studios or other such sites dealing with commercial or professional photographic prints, in addition to such capabilities, there is uncompromising demand for ability to attain satisfactory color during printing.

But it is not an easy matter to attain satisfactory color during printing. The principal factors responsible for this include the following.

The first factor is the fact that the characteristics affecting color in digital cameras, computer display monitors, printers, and other such image processing devices differ from device to device. For this reason, the color of the original image taken with the camera, the color of the image on the monitor screen, and the color of the image which is printed out will all be different. Despite this, conventional systems do not possess the capability to automatically adjust color to compensate for differences in color characteristics among devices. Unless the user has a good understanding of the color characteristics of each device and manually adjusts color himself or herself in, for example, photo retouching software or the like, the user will be unable to attain satisfactory color during printing.

The second factor is the fact that color space(s) of printer(s) change over time due to reasons such as deterioration over time in quality of ink(s) used in printer(s). As a result, even where it had been possible at some time in the past to satisfactorily print a desired image, it is sometimes the case when the aforementioned desired image is printed after passage of a certain period of time thereafter (e.g., several weeks thereafter) that the color, brightness, and so forth of the printed image differs from the color, brightness, and so forth of the image that was printed in the past (meaning that the image is no longer satisfactorily printed).

The present invention was conceived primarily to address the second factor, an object thereof being to provide printing technology capable of accommodating variation(s) in printer color space(s).

A printing system in accordance with a first aspect of the present invention comprises one or more print means (e.g., print engine(s), printer(s) comprising one or more print engines, etc.); one or more storage units storing one or more print means color profiles representing one or more color spaces for at least one of the print means; one or more control means accepting image data for printing, using at least one of the print means color profile or profiles stored in at least one of the storage unit or units to carry out color matching with respect to at least a portion of the image data for printing, and using at least a portion of the image data with respect to which color matching has been carried out to control at least one of the print means; and one or more update means updating at least one of the print means color profile or profiles within at least one of the storage unit or units at regular intervals and/or whenever appropriate.

A preferred embodiment further comprises one or more test pattern printing processing means accepting input of test pattern image data, at least a portion of the test pattern image data representing one or more test patterns, and providing at least a portion of the test pattern image data to at least one of the control means, at least a portion of the test pattern image data provided to at least one of the control means serving as at least a portion of the image data for printing; and one or more color profile creating means creating at least one most-recent print means color profile representing at least one current color space of at least one of the print means based on one or more test pattern printouts output by at least one of the print means and/or information about at least one of the printout or printouts; wherein at least one of the update means uses at least one of the created most-recent print means color profile or profiles to update at least one of the print means color profile or profiles within at least one of the storage unit or units. This embodiment may further comprise one or more test pattern master sheets on which at least one image of at least one of the test pattern or patterns is printed with at least one accurate color; and one or more image capturing means scanning at least one of the test pattern master sheet or sheets and at least one of the test pattern printout or printouts and creating captured image data corresponding to at least one of the test pattern master sheet or sheets and at least one of the test pattern printout or printouts; wherein at least one of the color profile creating means is capable of creating at least one of the most-recent print means color profile or profiles based on at least one color of at least one of the test pattern master sheet or sheets and at least one color of at least one of the test pattern printout or printouts represented by at least a portion of the captured image data. Alternatively or in addition thereto, such embodiment may comprise one or more user systems, and one or more server systems capable of communicating with at least one of the user system or systems; wherein at least one of the user system or systems comprises at least one of the print means, at least one of the storage unit or units, at least one of the control means, at least one of the update means, and at least one of the test pattern printing processing means; and wherein at least one of the server system or systems comprises at least one of the color profile creating means.

A user system in accordance with a second aspect of the present invention is capable of communicating by way of one or more communication networks with one or more server systems, the user system comprising one or more print means; one or more storage units storing one or more print means color profiles representing one or more color spaces for at least one of the print means; one or more control means accepting image data for printing, using at least one of the print means color profile or profiles stored in at least one of the storage unit or units to carry out color matching with respect to at least a portion of the image data for printing, and using at least a portion of the image data with respect to which color matching has been carried out to control at least one of the print means; one or more receiving means receiving, from at least one of the server system or systems by way of at least one of the communication network or networks, one or more most-recent print means color profile representing at least one current color space of at least one of the print means, at least one of the most-recent print means color profile or profiles being created based on one or more image printouts output by at least one of the print means under the control of at least one of the print control means and/or information about at least one of the printout or printouts; and one or more update means using at least one of the received most-recent print means color profile or profiles to update at least one of the print means color profile or profiles within at least one of the storage unit or units.

A preferred embodiment further comprises one or more test pattern printing processing means accepting input of test pattern image data, at least a portion of the test pattern image data representing one or more test patterns, and providing at least a portion of the test pattern image data to at least one of the control means, at least a portion of the test pattern image data provided to at least one of the control means serving as at least a portion of the image data for printing; wherein at least one of the most-recent print means color profile or profiles received by at least one of the receiving means is created based on one or more test pattern printouts output by at least one of the print means under the control of at least one of the control means and/or information about at least one of the printout or printouts.

In a still more preferred embodiment, the user system comprises one or more test pattern master sheets on which one or more test patterns is or are printed with at least one accurate color; one or more image capturing means scanning at least one of the test pattern master sheet or sheets and at least one of the test pattern printout or printouts, and creating captured image data corresponding to at least one of the test pattern master sheet or sheets and at least one of the test pattern printout or printouts; and one or more sending means sending at least either (1) or (2)―
(1) being at least a portion of the captured image data; and
(2) being information (e.g., information required for creation of print means color profile(s) which is or are the most recent version(s) thereof and which occupy less data storage space than captured image data (one example of which would be information indicating difference(s) in color therebetween)) created based on at least one color of at least one of the test pattern master sheet or sheets and at least one color of at least one of the test pattern printout or printouts represented by at least a portion of the captured image data― to at least one of the server system or systems. In accordance herewith, server system(s) may create the aforementioned most-recent print means color profile(s) based on captured image data received from user system(s) and/or the aforementioned created information and may send same to user system(s), and user system(s) may use such most-recent print means color profile(s) received from server system(s) to update print means color profile(s) within storage unit(s).

A method in accordance with a third aspect of the present invention, being a color printing method for one or more printing systems comprising one or more print means, comprises one or more steps in which one or more print means color profiles representing one or more color spaces for at least one of the print means is or are stored; one or more steps in which image data for printing is accepted, at least one of the print means color profile or profiles stored in at least one of the storage unit or units is used to carry out color matching with respect to at least a portion of the image data for printing, and at least a portion of the image data with respect to which color matching has been carried out is used to control at least one of the print means; and one or more steps in which at least one of the print means color profile or profiles within at least one of the storage unit or units is updated at regular intervals and/or whenever appropriate.

A computer program in accordance with a fourth aspect of the present invention is capable of being made available to one or more printing systems comprising one or more print means, the computer program being capable of causing one or more computers to carry out one or more steps in which one or more print means color profiles representing one or more color spaces for at least one of the print means is or are stored; one or more steps in which image data for printing is accepted, at least one of the print means color profile or profiles stored in at least one of the storage unit or units is used to carry out color matching with respect to at least a portion of the image data for printing, and at least a portion of the image data with respect to which color matching has been carried out is used to control at least one of the print means; and one or more steps in which at least one of the print means color profile or profiles within at least one of the storage unit or units is updated at regular intervals and/or whenever appropriate.

A printing system in accordance with a fifth aspect of the present invention comprises one or more print means; one or more data sources outputting image data for printing; one or more image filters (e.g., tone curve(s)) accepting input thereto of at least a portion of the image data for printing output by at least one of the data source or sources, carrying out prescribed processing on at least a portion of the image data for printing input thereto, and outputting therefrom at least a portion of the image data for printing after the prescribed processing has been carried out thereon; one or more storage units storing at least one of the image filter or filters; one or more control means controlling at least one of the print means so as to print at least a portion of the image data for printing output by at least one of the image filter or filters; and one or more update means updating at least one of the image filter or filters at regular intervals and/or whenever appropriate. At least one of the image filter or filters corresponds to at least one of the print means. It is preferred that at least one of the image filter or filters correspond not only to at least one of the print means but also correspond to a variety of print media (e.g., plain paper, glossy paper, compact discs, etc.).

In a preferred embodiment, such printing system further comprises one or more test pattern printing processing means accepting input of test pattern image data, at least a portion of the test pattern image data representing one or more test patterns, and providing at least a portion of the test pattern image data to at least one of the control means, at least a portion of the test pattern image data provided to at least one of the control means serving as at least a portion of the image data for printing; and one or more filter creating means creating at least one most-recent image filter corresponding to at least one current color space of at least one of the print means based on one or more test pattern printouts output by at least one of the print means and/or information about at least one of the printout or printouts. At such time, at least one of the update means uses at least one of the created most-recent image filter or filters to update at least one of the image filter or filters within at least one of the storage unit or units. In a still more preferred embodiment, the printing system further comprises (the following being, for example, placed together next to each other on one or more platens) one or more test pattern master sheets on which at least one of the test pattern or patterns is printed with at least one accurate color; and one or more image capturing means scanning at least one of the test pattern master sheet or sheets and at least one of the test pattern printout or printouts and creating captured image data corresponding to at least one of the test pattern master sheet or sheets and at least one of the test pattern printout or printouts. At such time, at least one of the filter creating means creates at least one of the most-recent image filter or filters based on at least one color of at least one of the test pattern master sheet or sheets and at least one color of at least one of the test pattern printout or printouts represented by at least a portion of the captured image data.

A method in accordance with a sixth aspect of the present invention, being a color printing method for one or more printing systems comprising one or more print means and one or more data sources outputting image data for printing, comprises one or more steps in which at least a portion of the image data for printing output by at least one of the data source or sources is input, prescribed processing is carried out on at least a portion of the input image data for printing, and one or more image filters output after the prescribed processing has been carried out is or are stored; one or more steps in which at least one of the print means is controlled so as to print at least a portion of the image data for printing output by at least one of the image filter or filters; and one or more steps in which at least one of the image filter or filters is updated at regular intervals and/or whenever appropriate. At least one of the image filter or filters corresponds to at least one of the print means.

A computer program in accordance with a seventh aspect of the present invention is capable of being made available to one or more printing systems comprising one or more print means and one or more data sources outputting image data for printing, the computer program being capable of causing one or more computers to carry out one or more steps in which at least a portion of the image data for printing output by at least one of the data source or sources is input, prescribed processing is carried out on at least a portion of the input image data for printing, and one or more image filters output after the prescribed processing has been carried out is or are stored; one or more steps in which at least one of the print means is controlled so as to print at least a portion of the image data for printing output by at least one of the image filter or filters; and one or more steps in which at least one of the image filter or filters is updated at regular intervals and/or whenever appropriate.

A computer system in accordance with an eighth aspect of the present invention comprises one or more image processing means (e.g., printing processing means) carrying out specific image processing on image data input thereto, the system comprising one or more test pattern master sheets on which one or more test patterns is or are printed with at least one accurate color; one or more image capturing means scanning at least one of the test pattern master sheet or sheets and one or more printouts of at least one of the test pattern or patterns, at least one of the test pattern master sheet or sheets and at least one of the test pattern printout or printouts being placed together on one or more platens, and creating captured image data in which included together there are results of capture for both at least one of the test pattern master sheet or sheets and at least one of the test pattern printout or printouts; and one or more means employing at least a portion of the captured image data to control and/or adjust at least one of the image processing means.

A method in accordance with a ninth aspect of the present invention, being capable of being used in the context of a computer system comprising one or more image processing means carrying out specific image processing on image data input thereto, comprises one or more steps in which one or more test pattern master sheets on which one or more test patterns is or are printed with at least one accurate color and one or more printouts of at least one of the test pattern or patterns are placed together on one or more platens, and at least one of the test pattern master sheet or sheets and at least one of the test pattern printout or printouts are scanned; one or more steps in which captured image data is created, results of capture carried out in at least one of the scanning step or steps for both at least one of the test pattern master sheet or sheets and at least one of the test pattern printout or printouts being included in the captured image data; and one or more steps in which at least a portion of the captured image data is employed to control and/or adjust at least one of the image processing means.

### BRIEF DESCRIPTION OF DRAWINGS

FIG. 1 is drawing showing a schematic example of printer and monitor gamuts.
FIG. 2 is a block diagram showing the overall constitution of an embodiment of the present invention.
FIG. 3 is a block diagram showing constitution, function, and operation at print server machine 2 and client machines 5A, 5B in photo studio system 1.
FIG. 4 is a block diagram showing constitution, function, and operation at print server machine 2 and center server machine 8.
FIG. 5 is a block diagram showing functional constitution of print server machine 2 and center server machine 8 for updating printer ICC profile(s).
FIG. 6 is a block diagram showing an example of application of printer ICC profile updating to a typical printing system in an embodiment of the present invention.
FIG. 7 is a block diagram showing a photo studio system associated with another embodiment of the present invention.
FIG. 8 is a block diagram showing functional constitution of print server machine 252 and center server machine 255 for updating compensating filter(s) in another embodiment of the present invention.

### BEST MODE FOR CARRYING OUT INVENTION

Before beginning description of embodiments, "color profiles" and "color matching," repeated reference to which is made throughout such description, will be described.

Each of the various image processing devices (e.g., cameras, image scanners, display monitors, printers, etc.) has its own unique color space(s) in which operations are carried out and its own unique gamut(s), i.e., locus or loci of colors that can be created. For example, while display monitors all operate within RGB color space, gamut will vary from monitor to monitor. Likewise, gamuts of printers, which carry out operations in CMYK color space, will be different for different printers. Furthermore, even the same printer will exhibit different gamuts depending upon the type of ink and printing medium (printing paper) used therewith.

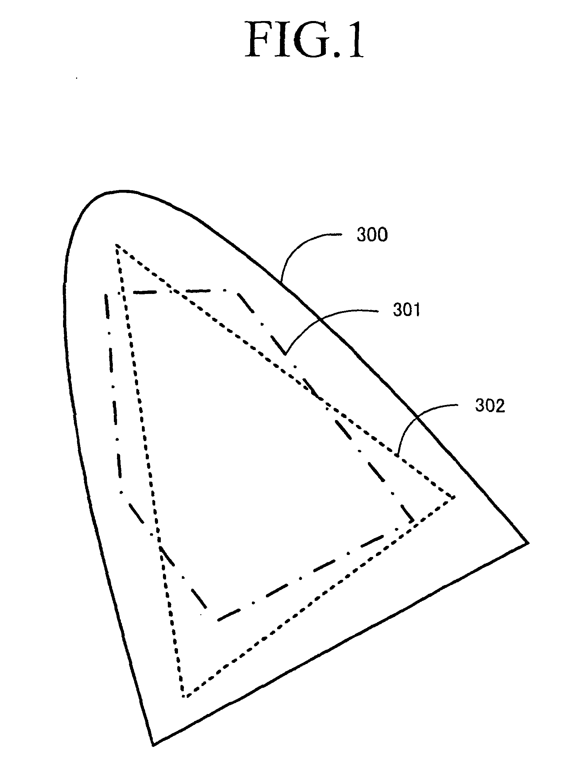

FIG. 1 is drawing showing a schematic example of gamuts of different devices. At FIG. 1, reference numeral 300 indicates gamut visibly perceivable by human beings, reference numeral 301 indicates gamut capable of being printed out by a particular printer, and reference numeral 302 indicates gamut capable of being displayed by a particular display monitor. As shown in FIG. 1, gamut varies depending on device.

An output device such as a monitor or printer is only capable of expressing colors within the range of its gamut. An input device such as a camera or image scanner is only capable of storing colors within the range of its gamut. The fact that gamut varies from device to device in this fashion means that the color space within which the device operates will vary from device to device. For example, while every printer operates within the same type of color space, i.e., CMYK, gamut will be different for each individual printer and for each ink and printing medium used therewith. There therefore exist different CMYK color spaces for each individual printer and for each ink and printing medium used therewith.

"Color profiles" refer to numerical representations used to provide rigorous definition of the color spaces within which various devices operate. A color profile includes indication of the type(s) of color space peculiar to that device (e.g., RGB, CMYK, LCH, etc.). But the primary information included as part of a color profile is conversion table(s) for conversion of color space(s) peculiar to that device (e.g., RGB, CMYK, LCH, and/or other such color spaces) to device-independent color space(s) (e.g., XYZ, Yxy, Lab, Luv, and/or other such color spaces), and/or for carrying out conversion in the reverse direction. Such conversion tables make it possible for characteristic gamuts of devices to be quantitatively defined.

The International Color Profile format established by the ICC (International Color Consortium) is a known standard for color profile format. In the description that follows, "ICC profile" refers to a color profile written in this International Color Profile format.

"Color matching," also called "color mapping," refers to the adjustment (shift) which must be made to color values in image data subject to conversion when converting image data in one particular color space to image data in a different color space so as to cause colors in the two color spaces to approximate one another. It is impossible to cause colors to match perfectly when going between two different color spaces if the gamuts thereof are different. But if, when converting image data of one color space to image data of a different color space, great care is exercised in shifting color values of such image data so as to compensate for the difference in gamuts between the two color spaces, it is possible to satisfactorily approximate colors in going from one of the two devices to the other. Processing for shifting color values in this way is called color matching (or color mapping).

Color matching may be carried out through use of color profiles, e.g., ICC profiles, respectively representing source (conversion input) color space(s) and target (conversion output) color space(s). For example, when converting RGB image data output from a digital camera to CMYK image data to be printed by a printer, color matching may be carried out through use of a color profile for the RGB color space of the digital camera as source, and a color profile for the CMYK color space of the printer as target. This will allow a printout to be obtained which has color(s) satisfactorily approximating color(s) as present in pictures taken with the digital camera. Alternatively, when converting RGB image data displayed on a monitor to CMYK image data to be printed by a printer, color matching may be carried out through use of a color profile for the RGB color space of the monitor as source, and a color profile for the CMYK color space of the printer as target. This will allow a printout to be obtained which has color(s) satisfactorily approximating color(s) as displayed on the monitor.

Color matching may be broadly categorized as falling into one of two categories depending upon the method used to handle colors present in the gamut of the source which lie outside of the bounds of the target gamut. In the first method, source colors lying outside of the target gamut are essentially discarded. In the second method, source colors lying outside of the target gamut are shifted so as to make them fall within the target gamut through use of interpolation processing or the like. These two methods each have advantages and disadvantages. Especially with conversion of photographic images, there is less tendency that a person looking at the post-conversion photographic image will be struck by a sense of unnaturalness if the latter color matching method is used. This latter color matching method is referred to as "perceptual color matching."

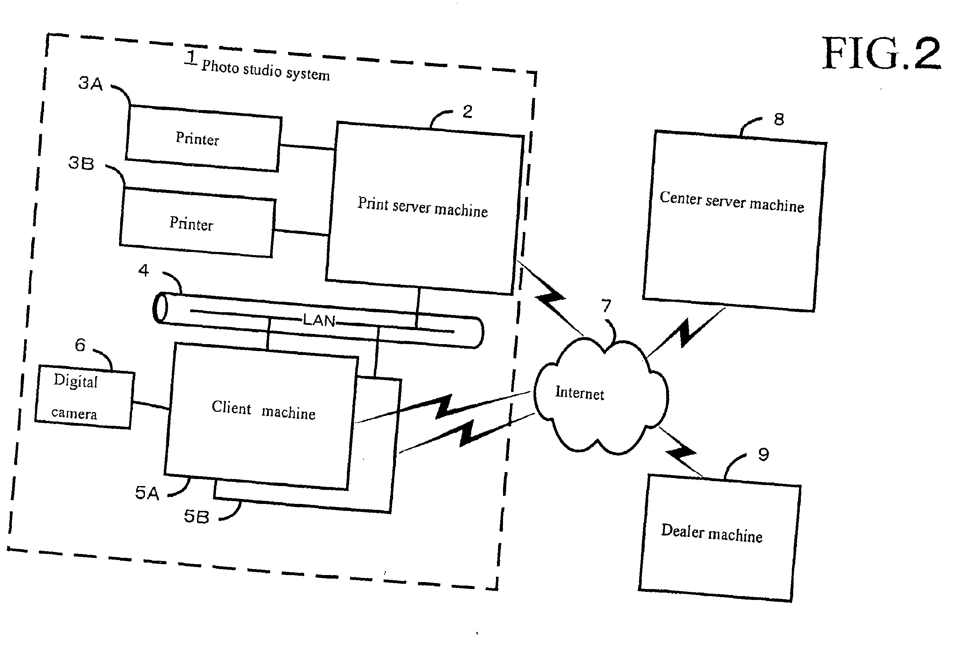

An embodiment of the present invention is described below. FIG. 2 shows the overall constitution of this embodiment.

At FIG. 2, each of a number of photo studios is equipped with photo studio system(s) 1. Present at photo studio(s) there is or are LAN(s) 4, such LAN(s) 4 connecting print server machine(s) 2 and one or a plurality of (e.g., two) computer machines (hereinafter "client machines") 5A, 5B. Client machines 5A, 5B may connect, e.g., via USB, to digital camera(s) 6. Furthermore, one or a plurality of (here, two) electronic printers 3A, 3B is or are respectively connected, e.g., via USB, to print server machine(s) 2. Each printer 3A, 3B is an inkjet printer employing for example pigment-type inks, these being capable of producing high-quality printed output that is extremely lightfast. Print server machine(s) 2 and the two printers 3A, 3B may be housed within a single dedicated box-like casing (not shown), permitting installation at a single location somewhere at the photo studio.

Client machines 5A, 5B are primarily used to read one or a plurality of photo images from digital camera(s) 6 and store same in disk storage and for editing one or more desired photo images and generating therefrom data representing print job(s) of desired number(s) of pages and other such operations. Included among the types of editing of photo images carried out here are photo retouching operations wherein desired enhancements such as trimming, local modifications, global color adjustment, and/or the like are carried out on individual photo images, print layout editing wherein one or more desired photo images is or are arranged so as to occupy the space on a sheet of media (print page), and so forth. Print server machine(s) 2, on the other hand, possesses or possess the ability to accept print job data from client machines 5A, 5B and to create respective page(s) of printed image(s) based thereon and send same to printers 3A, 3B. Furthermore, print server machine(s) 2 possesses or possess the ability to manage status, print job execution status and execution history, and other such information (hereinafter "print information") pertaining to printers 3A, 3B, and to communicate same to client machines 5A, 5B.

Moreover, existing separate from the photo studio(s) there is or are center server machine(s) 8, whose role it is to centrally manage operational status of photo studio systems 1 at a multiplicity of photo studios. Print server machines 2 and client machines 5A, 5B at respective photo studio systems 1 may respectively communicate with center server machine(s) 8 via the Internet 7. Center server machine(s) 8 gather print information for respective photo studios from print server machines 2 of the photo studio systems 1 thereof, this being stored in database(s) of center server machine(s) 8, where it is managed. Upon being logged onto by way of WWW browser(s) by user(s) at respective photo studios, center server machine(s) 8 may provide such a WWW browser with print information for that photo studio as stored in database(s) of center server machine(s) 8. Furthermore, when information indicating occurrence of prescribed event(s) previously specified by user(s) at respective photo studios (e.g., a printer paper jam or other such error) is received from such a photo studio, center server machine(s) 8 may transmit such fact by electronic mail to email address(es) previously specified by such a user (e.g. an email address for a mobile phone belonging to such a user). In addition, center server machine(s) 8 may, based on print information from respective photo studios, calculate consumed quantity or quantities of print media, ink, and/or other such consumables at such a photo studio and may make arrangements for supply of consumables to respective photo studios, carry out billing for amounts in connection therewith, and so forth.

Furthermore, in one mode of photo studio business management, intermediate management organization(s) (hereinafter "dealer(s)") might be interposed between center(s) and the several photo studios, each dealer managing business from a plurality of photo studios. In such a case, each dealer would also have computer machine(s) (hereinafter "dealer machine(s)") 9 whereon WWW browser(s) and/or the like is or are installed. Moreover, upon being logged onto by way of WWW browser(s) by respective dealers, center server machine(s) 8 may provide such a WWW browser with print information for photo studio(s) whose account(s) is or are handled by such a dealer. Dealer machine(s) 9 may take the place of center server machine(s) 8 in making arrangements for supply of consumables to respective photo studios, billing for amounts in connection therewith, and so forth based on print information for respective photo studios.

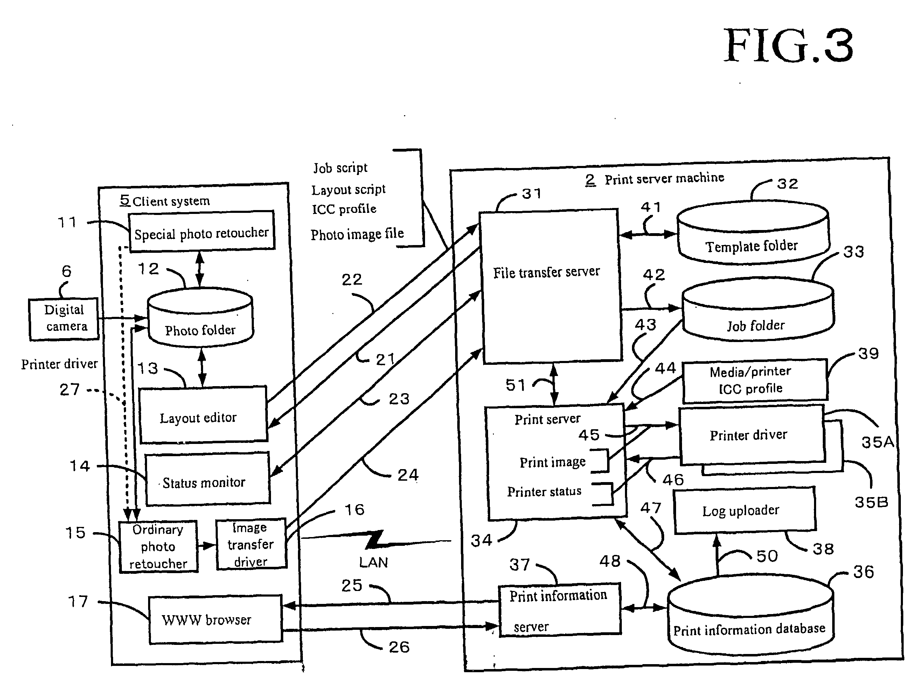

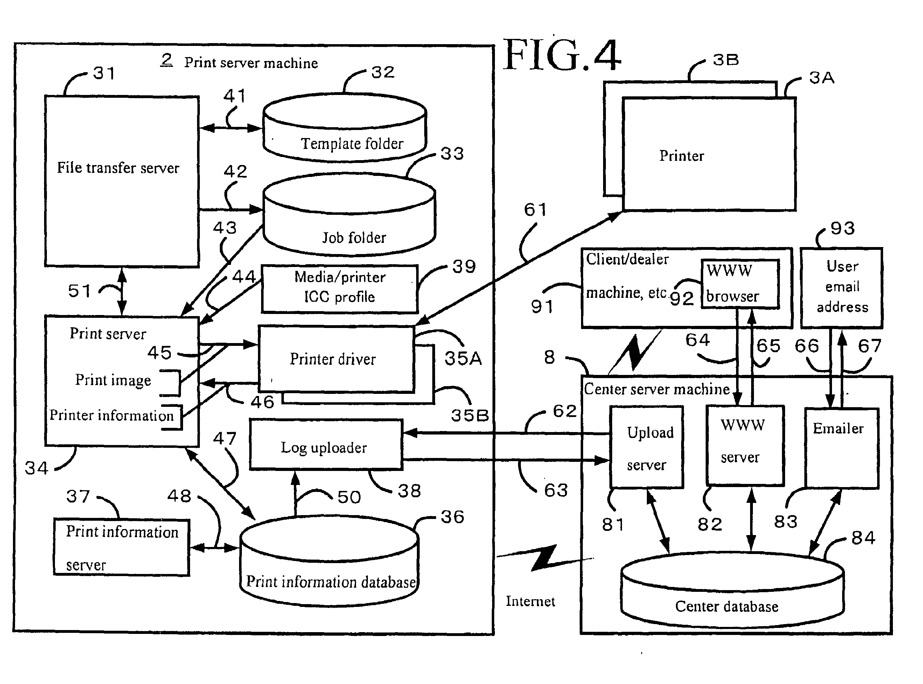

Below, constitution and function of the various machines mentioned above will be described in further detail with reference to FIG. 3 and FIG. 4. FIG. 3 shows constitution and function at print server machine 2 and client machines 5A, 5B in photo studio system 1. FIG. 4 shows constitution and function at print server machine 2 and center server machine 8. By looking at FIG. 3 and FIG. 4 together, the relationship among the various machines with respect to exchange of information therebetween will become clear.

Referring first to FIG. 3, constitution and function of client machines 5A, 5B will be described. Note that at FIG. 3, client machines 5A, 5B are indicated collectively by the single block of client system 5. The number of client machines contained at client system 5 need not be two as in the present embodiment, it being possible to employ any number so long as there is one or more thereof. Furthermore, the plurality of application programs 11 through 17 such as will be described below which client system 5 possesses may be installed on all of the client machines comprised by client system 5 or may be installed on any one machine only, or may be installed in distributed fashion such that one program is for example installed on client machine 5A, another program is for example installed on client machine 5B, and so forth.

As shown in FIG. 3, a plurality of application programs, including special photo retoucher 11, layout editor 13, status monitor 14, ordinary photo retoucher 15, image transfer driver 16, and WWW (World Wide Web) browser 17, are installed at client system 5. Moreover, a program for sending and receiving electronic mail (not shown) may also be installed at client system 5.

Special photo retoucher 11, being a specially designed photo retouching program for photo studio use, is constituted so as to permit prescribed retouching tasks typically required at photo studios to be carried out efficiently and in routine fashion.

When beginning retouching operations on respective photo image(s), this special photo retoucher I 1 automatically (always, unless otherwise requested by the user) causes ICC color profile(s) to be set which represents or represent color space(s) in which those retouching operations are to be carried out. The user may specify the type of color space(s) for which ICC color profile(s) is or are to be set. But where there is no specific specification from user(s), special photo retoucher 11 will always cause ICC color profile(s) to be set in accordance with default settings. Furthermore, when outputting photo image(s) after retouching thereof is finished, special photo retoucher 11 embeds such ICC profile(s) in file(s) containing such photo image(s).

Note that color space(s) in which photo image editing operations are carried out prior to printing, such as color space(s) in which this special photo retoucher 11 carries out retouching operations or color space(s) in which layout editor 13, described next, carries out print layout editing operations, will hereinafter be referred to as "working color space(s)" for such photo images. Note also that ICC profile(s) representing such working color space(s) will hereinafter be referred to as "working ICC profile(s)."

Layout editor 13, being an application program for print layout editing intended for photo studios, is designed to permit print layout editing operations, wherein one or more photo images is or are arranged so as to occupy print page(s) (the space(s) on sheet(s) of print media) with size(s) of respective photo image(s) being made to conform to desired standard size(s), to be carried out quickly and in routine fashion. That is, as indicated by arrow 21, layout editor 13 reads from print server machine 2 a multiplicity of templates respectively representing various basic print layouts previously prepared and made available at print server machine 2, and displays template(s) desired by user(s) at monitor(s) of client system 5. The basic print layouts represented by the respective templates are space(s) (print page(s)) of standard print media size(s) capable of being used by printer(s), e.g., A4, A3, or B4, etc., in landscape (horizontal) or portrait (vertical) orientation, wherein one or a plurality of photo frame(s) of standard photo size(s), e.g., 8 x 10 inch, 5 x 7 inch, 2.5 x 3.5 inch, or 1.75 x 2.5 inch, is or are arranged. Many templates are such that photo frame(s) is or are efficiently arranged so as to make sufficiently small the total area outside of photo frame(s) in order to make economic use of print media. By using graphical user interface(s) of layout editor 13 to drag and drop desired photo image(s) onto desired respective photo frame(s) within template(s), user(s) can cause print page layout editing to be carried out automatically.

When beginning print layout editing operations on respective photo image(s), layout editor 13 also causes working ICC profile(s) for working color space(s) in which such operations are to be carried out to be set for such photo image(s). If particular ICC profile(s) has or have previously been embedded in such photo image(s), layout editor 13 uses such embedded ICC profile(s) as working ICC profile(s). Because image(s) which has or have, for example, been subjected to retouching by special photo retoucher 11 will already have embedded therein ICC profile(s) for color space(s) in which special photo retoucher 11 operated, this means that layout editor 13 will operate in exactly the same color space(s) as the color space(s) in which special photo retoucher 11 operated. If, on the other hand, such photo image(s) does or do not yet have ICC profile(s) embedded therein, layout editor 13 automatically guesses at ICC profile(s) which it assumes to have been previously embedded in such photo image(s), using such assumed ICC profile(s) as working ICC profile(s). User(s) may specify exactly what ICC profile(s) is or are to be assumed in such a case. But where there is no specific specification from user(s), layout editor 13 will automatically use specific ICC profile(s) which has or have been set by default as the ICC profile(s) which it assumes and uses as if previously embedded in such photo image(s). Furthermore, when outputting photo image(s) after print layout editing is finished, layout editor 13 embeds working ICC profile(s) automatically set as described above in file(s) containing such photo image(s).

Upon completion of editing of the layout of all print pages constituting a single print job, layout editor 13 creates data for that print job, which is transferred to print server machine 2 as indicated by arrow 22. Such print job data includes data indicating layout of all print page(s) contained within that print job, file(s) containing all photo image(s) to be placed on such print page(s), and working ICC profile(s) embedded in such photo image file(s).

Layout editor 13 is made available as an independent program separate from retouching program(s) such as the special photo retoucher 11, described above, or the ordinary photo retoucher 15, described below. Moreover, client machines 5A, 5B, whereon such programs are installed, are connected by way of LAN 4 so as to permit mutual sharing of data, programs, and other such resources. This makes it possible for studio business to proceed efficiently and in such manner as to permit one user at a studio to for example use one client machine 5A to carry out photo retouching operations with retouching program 11 or 15 on photo image(s) acquired from digital camera(s) 6, while in parallel fashion with respect thereto another user might use the other client machine 5B to carry out print layout editing operations with layout editor 13 on photo image(s) which has or have already been retouched. Furthermore, if there are three or more client machines, this will allow studio business to proceed in all the more flexible and efficient fashion.

As indicated by arrow 23, status monitor 13 obtains the most recent history information pertaining to errors generated by printers 3A, 3B and completion of execution (completion of printing) of respective print jobs from print server machine 2 at time intervals (e.g., every 10 minutes, etc.) previously set by user(s), displaying same on display monitor(s) of client system 5.

Ordinary photo retoucher 15, being a conventionally known ordinary photo retouching program, is provided not only with retouching functionalities typically required at photo studios but also with a diverse variety of retouching functionalities capable of satisfying graphical designers and the like. With respect to tasks within the bounds of retouching typically performed at photo studios, special photo retoucher 11, described above, is designed to allow operations to proceed more efficiently than would be the case with ordinary photo retoucher 15. But in the event of a desire to perform atypical retouching not supported by special photo retoucher 11, user(s) may use ordinary photo retoucher 15 instead of special photo retoucher 11.

Special photo retoucher 11, described above, is designed to permit retouching operations to be performed in cooperation with ordinary photo retoucher 15. That is, special photo retoucher 11 has button(s) on its graphical user interface for launching ordinary photo retoucher 15. Moreover, if such button(s) is or are pressed by user(s) while retouching operations are underway on particular photo image(s), special photo retoucher 11 automatically assigns specific file name(s) to and saves the photo image(s) on which operations were underway, storing such file name(s), and furthermore, as indicated by arrow 27, launches ordinary photo retoucher 15 and informs ordinary photo retoucher 15 of such file name(s), causing such photo image(s) to be opened therein. In addition, special photo retoucher 11 itself becomes inactive. Upon termination of ordinary photo retoucher 15 thereafter, special photo retoucher 11 automatically becomes active again, reopening the photo image file(s) having the file name(s) which was or were stored. As a result, if the photo image(s) passed from special photo retoucher 11 to ordinary photo retoucher 15 as described above is or are stored with the same file name(s) prior to termination of ordinary photo retoucher 15, this means that special photo retoucher 11 will automatically reopen that or those photo image file(s), permitting resumption of continued retouching operations thereon. Combination of special photo retoucher 11 and ordinary photo retoucher 15 in this way makes it possible for retouching operations to proceed efficiently. Moreover, when photo image(s) is or are passed from special photo retoucher 11 to ordinary photo retoucher 15, because there is no guarantee that working ICC profile(s) of such photo image(s) would be preserved by ordinary photo retoucher 15, special photo retoucher 11 discards such working ICC profile(s). Furthermore, when reopening such photo image file(s), special photo retoucher 11 again causes working ICC profile(s) to be set.

Image transfer driver 16, launched at time(s) of print request(s) from ordinary photo retoucher 15, creates print job data for photo image(s) open in ordinary photo retoucher 15 and transfers same to print server machine 2, as indicated by arrow 24.

WWW browser(s) 17 is or are program(s) for accessing various WWW servers available over the Internet 7 or LAN(s) 4. First among the ways in which WWW browser(s) 17 may be used in connection with photo studio business is for connecting to print information server(s) (such a server representing a type of WWW server) 37 of print server machine 2 and, as indicated by arrows 25 and 26, accessing status, print job execution history, and other such printer information for printers 3A, 3B which is managed by print server machine 2. Second, as indicated by arrow 65 of FIG. 4, is for connecting to WWW server(s) 82 of center server machine(s) 8 and accessing printer information or the like for such photo studio(s) which is managed by center server machine(s) 8.

Next, referring to FIG. 3 and FIG. 4, function and constitution of print server machine 2 will be described.

As shown in FIG. 3 and FIG. 4, programs including file transfer server 31, print server 34, printer drivers 35A, 35B, print information server 37, and log uploader 38, are installed at print server machine 2.

File transfer server 31 possesses a multiplicity of templates for use in print layout editing and carries out processing for providing such templates to layout editor 13 of client system 5, processing for accepting print job data from image transfer driver 16 and/or layout editor 13 of client system 5 and for transferring same to print server 34, processing for sending to status monitor 14 of client system 5 information concerning the situation with respect to occurrence of errors, termination of execution of print jobs, and so forth at printers 3A, 3B which is provided by print server 34, and so forth.

This file transfer server 31 possesses templates for a variety of basic print layouts previously prepared and made available at template library folder 32 within disk storage at print server machine 2. Furthermore, when specific template(s) is or are requested by layout editor 13 of client system 5, file transfer server 31 reads the requested template(s) from template library folder 32 as indicated by arrow 41, and transfers same to layout editor 13 as indicated by arrow 21. Utilization of such templates facilitates print layout editing at layout editor 13. It is possible to make use of the shared templates which are centrally managed by print server machine 2 no matter which client machine 5A, 5B is or are being used to carry out print layout editing.

Furthermore, file transfer server 31 receives print job data from image transfer driver 16 and/or layout editor 13 of client system 5 as indicated by arrow 22 (and/or 24), and stores such print job data in job folder 33 within disk storage at print server machine 2 as indicated by arrow 42. As shown in the drawing, the print job data from layout editor 13, indicated by arrow 22, comprises job script(s) for such print job(s), layout script(s) for one or more pages included within such print job(s), file(s) containing one or a plurality of photo image(s) included within such print job(s), and working ICC profile(s) for such photo image(s). What is here referred to as a job script is or are file(s) containing description of item(s) necessary for management of such print job(s); e.g., user name(s), printing priority, number of copies to be printed, designation of type(s) (material(s)) and size(s) of print media, designation of printer(s), time stamp(s) for such print job(s), and/or the like. What is here referred to as a layout script is or are file(s) containing description of item(s) necessary for determining print layout on such respective print page(s); e.g., template number(s), name(s) of file(s) containing photo image(s) to be placed in respective photo frame(s) on respective template(s), settings for print options (e.g., printing of alignment mark(s), file name(s), etc.), and/or the like. To reduce print job data volume, each photo image file is as a rule sent only once in a single print job data transmission regardless of how many of such photos are to be printed. Working ICC profile(s) embedded in respective photo image file(s), as described above, represent working color space(s) in which editing operations were carried out on such photo image(s) at client system 5.

Furthermore, upon receipt of request(s) from status monitor 14 of client system 5 for history information, file transfer server 31 communicates same to print server 34 as indicated by arrow 23, and moreover, receives history information pertaining to printer errors and completion of print jobs sent thereto from print server 34 responsive to such request and transfers same to status monitor 14 of client system 5 as indicated by arrow 23.

Print server 34 carries out processing for creating print image data for respective page(s) from print job data, processing for assignment of respective set(s) of print image data to printer(s) 3A and/or 3B and for sending such set(s) of print image data to printer driver(s) 35A and/or 35B for printer(s) to which it or they was or were assigned, processing for managing status and print job execution history of printer(s) 3A and/or 3B as provided by printer driver(s) 35A and/or 35B, and so forth. Printer drivers 35A, 35B―respectively corresponding to printers 3A, 3B―carry out processing for converting print image data received from print server 34 into data of such form as to permit processing thereof by printers 3A, 3B and for sending same to printers 3A, 3B, processing for monitoring status of printers 3A, 3B and communicating same to print server 34, and so forth.

Print server 34 reads print job data for respective print job(s) from job folder 33 as indicated by arrow 43. As previously mentioned, print job data includes job script(s) for such print job(s), layout script(s) for print page(s), photo image file(s), and working ICC profile(s) for photo image(s). Print server 34 uses layout script(s) for respective print page(s) included within such print job data, and uses file(s) containing photo image(s) placed on respective print page(s), to create print image data for respective print page(s) with layout(s) as edited by user(s).

In creating print image data for respective print page(s), print server 34 reads such job script(s) and ascertains the printer(s) and print media (hereinafter "output printer(s)" and "output media") type(s) to be used for printing such print page(s). In addition, as indicated by arrow 44, print server 34 reads, from prescribed folder 39 at print server machine 2, ICC profile(s) (hereinafter "printer ICC profile(s)") representing color space(s) (hereinafter "printer color space(s)") in which such output printer(s) 3A and/or 3B is or are to carry out printing operations using such output media. Previously saved within such folder 39 are different printer ICC profiles for each type of print media respectively capable of being used with printer 3A and printer 3B. Furthermore, printer ICC profiles for all printers of all photo studios are stored at center server machine 8, print server machine(s) 2 of respective photo studio(s) being capable of downloading printer ICC profile(s) for printer(s) 3A, 3B at such photo studio(s) from center server machine 8 by designating, for center server machine 8, machine number(s) for such printer(s) 3A, 3B (such machine numbers being identification numbers unique to the individual printers).

After reading printer ICC profile(s) corresponding to output printer(s) and output media from folder 39 as described above, print server 34 uses the printer ICC profile(s) which was or were read and working ICC profile(s) for respective photo image(s) on respective print page(s) to carry out perceptual color matching on respective set(s) of photo image data. This permits respective set(s) of photo image data to be adjusted so as to produce color(s) when printed out that is or are as close as possible to the color(s) present during editing thereof. In addition, print server 34 uses such adjusted photo image data to create print image data for respective print page(s). Print server 34 thereafter sends the created print image data for respective print page(s) to printer driver(s) 35A and/or 35B corresponding to output printer(s) as indicated by arrow 45. Printer drivers 35A, 35B respectively convert print image data (e.g., RGB-type bitmapped image data) received from print server 34 into print data of such form as to permit processing thereof by printers 3A, 3B (e.g., carrying out color conversion from RGB to CMYK, halftoning, division into bands, addition of required control information, etc.), and send the created print data to the corresponding printer(s) 3A, 3B as indicated by arrow 61 in FIG. 4.

Furthermore, at appropriate time or times, printer driver(s) 35A, 35B acquires or acquire from corresponding printer(s) 3A, 3B the status (e.g., operational status, error status, consumables status, etc.) of printer(s) 3A, 3B and sends or send acquired printer status to print server 34 as indicated by arrow 46. Print server 34 ascertains status with respect to execution of print job(s) sent to printer driver(s) 35A, 35B based on the printer status received from printer driver(s) 35A, 35B. Furthermore, as indicated by arrow 47, print server 34 writes ascertained status of printer(s) 3A, 3B, print job execution status, and other such information to print information database 36 at print server machine 2. As a result, a history of the status of printers 3A, 3B and a history of executed print jobs come to be stored at print information database 36. Moreover, studio user registration information is also managed at print information database 36.

Furthermore, upon receipt of information request(s) from status monitor 14 of client system 5 via file transfer server 31 as indicated by arrow 51, print server 34 as indicated by arrow 47 reads from print information database 36 that information within the error history and history of completed print jobs for printer(s) 3A, 3B which is most recent and has not yet been communicated to client system 5, and sends same to file transfer server 31 as indicated by arrow 51. As has already been described, this most recent error history and history of print jobs for which execution has been completed are immediately transferred to status monitor 14 of client system 5 and are displayed at display monitor(s) of client system 5.

Print information server 37 is a type of WWW server, and upon being logged onto (arrow 26) by an entity having registered user privileges from WWW browser 17 of client system 5, print information server 37 creates web page(s) respectively displaying content such as studio user registration information, printer status history or histories, and/or print job execution history or histories stored at print information database 36, and provides same to such WWW browser 17 as indicated by arrow 25. Furthermore, print information server 37 also has print job history search capability or capabilities, and may receive search request(s) from user(s) from WWW browser 17, may search print information database 36 for print job history or histories requested by user(s), and may return search results to WWW browser 17. Moreover, print information server 37 also has print job control capability or capabilities, receiving control request(s) (e.g., for deletion, changes in priority, number of copies to be printed, and/or other such particulars of job content, etc.) from user(s) from WWW browser 17 for print job(s) waiting to be printed and altering information for such print job(s) within print information database 36. In addition, print information server 37 also has user registration capability or capabilities, and upon being logged onto from WWW browser 17 by an entity having administrator privileges at such photo studio, may register new user information with print information database 36.

Log uploader 38 reads new print information not yet sent to center server machine 8 from print information database 36 at regular intervals (and/or whenever appropriate, as the case may be) in accordance with upload schedule(s) (time(s), time interval(s), etc. at which uploading is to be carried out) previously specified by center server machine 8, and uploads same to center server machine 81 as indicated by arrow 63 in FIG. 4.

Furthermore, log uploader 38 has a WATCHDOG MODE for immediately reporting to user(s) abnormalities at photo studio system(s) I occurring when user(s) is or are absent or the like. A user wishing to make use of WATCHDOG MODE registers in advance with log uploader 38 the type(s) of abnormality to be reported (e.g., various categories of printer errors, etc.) and email address(es) (e.g., email address(es) for user mobile phone(s)) as desired by the user. Log uploader 38 communicates such registered email address(es) to center server machine 8. By putting log uploader 38 into watchdog mode at time(s) such as when such user(s) will be away from photo studio(s) or the like, upon occurrence of the specified abnormality or abnormalities log uploader 38 immediately communicates the fact of occurrence of such abnormality or abnormalities to center server machine 8. Upon receipt thereof, center server machine 8 creates email reporting occurrence of such abnormality or abnormalities, which it sends to such registered email address(es). This makes it possible for user(s) to be made quickly aware of abnormalities occurring at studio(s) of user(s) even when such user(s) is or are away from such studio(s).

Next, referring to FIG. 4, constitution and function of center server machine 8 will be described.

As shown in FIG. 4, application programs including upload server 81, WWW server 82, and emailer 83 are installed at center server machine 8.

Upload server 81, as indicated by arrow 62, communicates, to log uploader(s) 38 of respective photo studio(s), upload schedule(s) (time(s), time interval(s), etc. at which uploading is to be carried out) managed by center database 84, each studio having its own upload schedule(s), and moreover, receives the most recent print information for such studio(s) sent thereto from log uploader(s) 38 of respective studio(s) in accordance with such upload schedule(s) and stores same at center database 84 of center server machine 8.

Furthermore, at time or times when communication of occurrence of abnormality or abnormalities is received from log uploader(s) 38 of respective studio(s) while in watchdog mode, described above, upload server 81 immediately passes such communication of occurrence of abnormality or abnormalities to emailer 83 by way of center database 84. Upon receipt thereof, emailer 83 immediately creates email reporting occurrence of such abnormality or abnormalities, which it sends, as indicated by arrow 66, to previously registered email address(es) 93 as desired by user(s). This makes it possible for user(s) to be made quickly aware of abnormalities occurring at studio(s) of user(s) even when such user(s) is or are away from such studio(s).

Upon being logged onto from WWW browser 92 installed at some computer machine(s) 91 (e.g., client machine(s) 5A, 5B, dealer machine(s) 9, or other such computer(s), PDA(s), mobile phone(s), and/or the like) by an entity having user, dealer, system-wide administrator privileges, or the like, WWW server 82 reads from center database 84 print information, user information, and/or the like of a range commensurate with privileges with which such entity is logged on thereto, creates web page(s) displaying such information, and sends same to such WWW browser 92 as indicated by arrow 65. What is here referred to as a range commensurate with privileges with which such entity is logged on thereto might for example in the case of user privileges mean "extending only to photo studio(s) of such user(s) and only to such user(s)," or might in the case of dealer privileges mean "extending only to photo studio(s) whose account(s) is or are handled by such dealer(s) and only to user(s) included in such account(s)," or might in the case of system-wide administrator privileges mean "extending to all photo studio(s) and to all user(s)."

Furthermore, also managed by center database 84 in addition to print information and user information of respective photo studio(s) is a variety of information including amounts of consumables used at respective studio(s) as calculated by the center and amounts billed by the center, various news-type communications issued by the center, and so forth. Such information is also communicated to respective user(s) and respective dealer(s) by WWW server 82 and/or emailer 83.

The foregoing is the overall system associated with the present embodiment(s).

Now, in the foregoing system, color space(s) of printer(s) 3A, 3B can change over time due to reasons such as deterioration over time in quality of ink(s) used in printer(s) 3A, 3B. As a result, even where it had been possible at some time in the past to satisfactorily obtain printout(s) of desired image(s) (e.g., printout(s) obtained might have been close to expectations), it is sometimes the case when the aforementioned desired image(s) is or are printed after passage of a certain period of time thereafter (e.g., several weeks thereafter) that the color, brightness, and so forth of the image printout(s) differ from the color, brightness, and so forth of the printout(s) obtained in the past (e.g., printout(s) obtained may not be close to expectations).

Printer ICC profile(s) stored in prescribed folder(s) 39 at print server machine(s) 2 correspond to each of the various printer(s) 3A, 3B and print media as has already been described, but such printer ICC profile(s) do not exhibit correspondence with respect to change(s) in color space(s) of printer(s) 3A, 3B over time. Stated differently, a printer ICC profile only corresponds to a printer color space at a prescribed point in time (e.g., the color characteristics of the printer main body, ink, and print medium existing at the time the product was shipped).

In the present embodiment, method(s) described below therefore make it possible to update printer ICC profile(s) so as to permit accommodation of change(s) in printer color space(s) with time and make it possible to achieve satisfactory color printing.

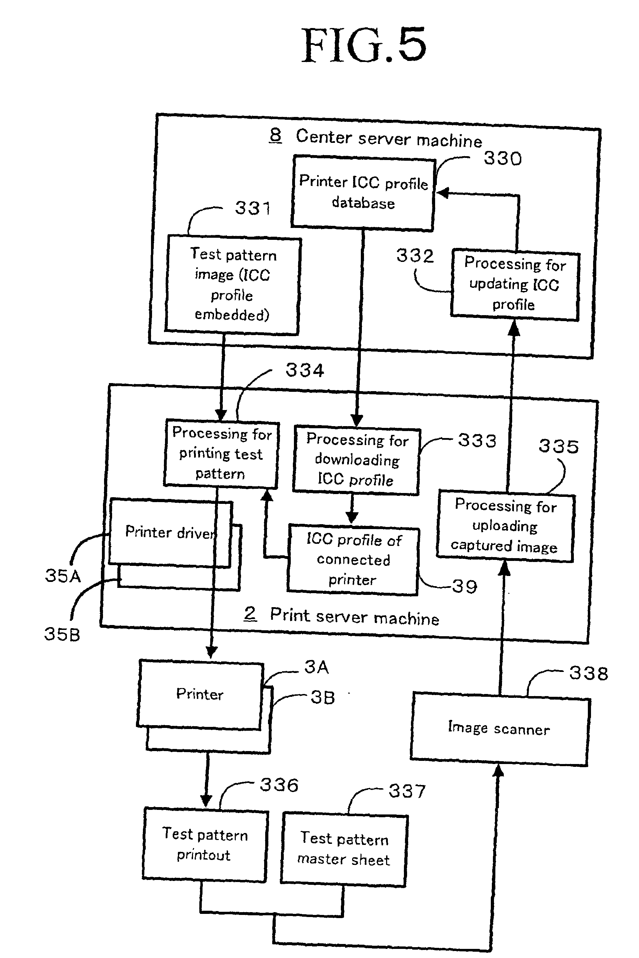

FIG. 5 shows functional constitution of print server machine 2 and center server machine 8 for updating printer ICC profile(s).

As shown in FIG. 5, center server machine 8 possesses printer ICC profile database 330, which stores printer ICC profile(s) for all printers respectively installed at all photo' studio(s). Stored therein for each respective printer are a plurality of printer ICC profiles respectively corresponding to a plurality of usable types of print media. Printer ICC profile(s) for respective printer(s) are associated with machine number(s) of respective printer(s). At time or times when photo studio system(s) 1 of respective studio(s) is or are installed, print server machine 2 carries out ICC profile downloading processing 333. ICC profile downloading processing 333 is such that machine number(s) of printer(s) 3A, 3B of such studio(s) is or are communicated to center server machine 8, all printer ICC profile(s) corresponding to such printer(s) 3A, 3B (i.e., respective printer ICC profile(s) corresponding to respective printer(s) 3A, 3B as well as respective print media capable of being accommodated by respective printer(s) 3A, 3B) is or are downloaded from center server machine 8, and such downloaded printer ICC profile(s) is or are stored in prescribed folder(s) 39. Thereafter, when creating print image(s), printer ICC profile(s) stored within such folder(s) 39 may be used for color matching.

In order to investigate change(s) in printer color characteristics at printer(s) 3A, 3B, user(s) may at regular intervals or at desired time(s) (e.g., when ink(s) and/or print media are changed and/or replaced, when printout color(s) appear strange, etc.) execute test pattern printing processing 334, which is installed at print server machine 2. Test pattern printing processing 334 is such that image data 331 for prescribed test pattern(s) is downloaded from center server machine 8. Embedded in downloaded test pattern image data 331 is or are ICC profile(s) representing color space(s) of such test pattern image data. Test pattern printing processing 334 is such that printer ICC profile(s) corresponding to combination(s) of print media and printer(s) 3A, 3B being investigated is or are read from folder(s) 39, and perceptual color matching is carried out using such printer ICC profile(s) and test pattern image data ICC profile(s) so as to adjust such test pattern image data. Moreover, test pattern printing processing 334 is such that such adjusted test pattern image data is provided to printer driver(s) 35A and/or 35B, such adjusted test pattern image data serving as image data for printing, and test pattern(s) is or are printed at printer(s) 3A, 3B being investigated.

Test pattern printout(s) 336 obtained as a result thereof may be sent from studio(s) to the center by mail, for example. At the center, colorimetry may be carried out on such test pattern printout(s) 336, and based on results of such colorimetry new printer ICC profile(s) may be created which represents or represent the current color space(s) of printer(s) 3A, 3B being investigated, such new printer ICC profile(s) being input at center server machine 8. At center server machine 8, printer ICC profile(s) for printer(s) 3A, 3B being investigated which is or are present at printer ICC profile database 330 may be updated to such new printer ICC profile(s). Print server machine 2 thereafter downloads, from center server machine 8, new printer ICC profile(s) for printer(s) 3A, 3B being investigated, and updates printer ICC profile(s) for printer(s) 3A, 3B being investigated which is or are present within folder(s) 39 to such downloaded new printer ICC profile(s). Print server machine 2 can then use such new printer ICC profile(s).

Moreover, electronic method(s) such as the following may be used as method(s) for sending test pattern printout(s) 336 to the center.

To wit, as shown in FIG. 5, user(s) at photo studio(s) place, next to each other on platen(s) of image scanner(s) 338, desired print medium or media on which test pattem(s) has or have been printed (hereinafter "test pattern printout(s)") 336 and preprepared test pattern master sheet(s) 337, and cause image scanner(s) 338 to scan such test pattern printout(s) 336 and master sheet(s) 337 in a single image scanning run. What is referred to as a test pattern master sheet 337 is a sheet on which a test pattern is printed with accurate color(s), same being distributed in advance to respective photo studio(s). Moreover, the reason for carrying out scanning in a single image scanning run is that, since image scanner color space(s) vary in subtle fashion with every image scanning run, causing scanning to be carried out in a single image scanning run makes it possible for printout(s) 336 and master sheet(s) 337 to be scanned within the same color space(s) and makes it possible for difference(s) in color(s) therebetween to be accurately detected.

Image data captured from printout(s) 336 and master sheet(s) 337 which is output from image scanner 338 may be acquired by print server machine 2, and may be uploaded to center server machine 8 by means of captured image data uploading processing 335 (uploaded data may include data indicating print medium or media being used and/or data identifying printer ICC profile(s) being used).

At center server machine 8, ICC profile updating processing 332 is such that any difference in color(s) between test pattern printout(s) 336 and master sheet(s) 337 is detected based on such uploaded captured image data; furthermore, based on results of such detection, new printer ICC profile(s) is or are created which represents or represent the current color space(s) of printer(s) 3A, 3B being investigated (such printer ICC profile(s) will of course correspond to print medium or media of printout(s) 336), and corresponding printer ICC profile(s) within printer ICC profile database 330 is or are updated. Center server machine 8 downloads updated printer ICC profile(s) to print server machine(s) 2, such downloading being carried out automatically at certain time(s), and/or in response to request(s) from print server machine(s) 2 itself or themselves, and/or in response to request(s) from user(s) by way of print server machine(s) 2.

The foregoing is the flow of processing in connection with printer ICC profile updating. Such printer ICC profile updating may be carried out at regular intervals and/or whenever appropriate in order to investigate changes in printer(s) 3A and/or 3B with time. Alternatively or in addition thereto, same may be carried out when new print media type(s) are added to the type(s) of print media available for use at printer(s) 3A and/or 3B. In such case, new printer ICC profile(s) corresponding to newly added print media type(s) will be created at center server machine 8, will be added to printer ICC profile database 330, and will be downloaded to print server machine(s) 2.

Moreover, even where print media type is the same, because difference(s) in manufacturing lot will cause printer color space(s) to vary in subtle fashion (meaning that printout color(s) will be different), printer ICC profile(s) may alternatively or in addition be updated when print media of different manufacturing lot(s) is or are used at printer(s) 3A and/or 3B.

While there are a number of types of image scanner 338 capable of being employed in the foregoing printer ICC profile updating processing flow, image scanner(s) 338 permitting printout(s) 336 and test pattern master sheet(s) 337 to be easily captured in a single image scanning run, such as, for example, flatbed-type image scanner(s) 338, is/are preferred. Furthermore, test pattern master sheet(s) 337 may be made available in as many type(s) of print media as is/are capable of being accommodated by printer(s) 3 A and/or 3B; in which case, test pattern master sheet(s) 337 of the same print medium or media as test pattern printout(s) 336 would be placed next to each other on the aforementioned platen(s) at the time that the aforementioned single image scanning run is carried out.

Furthermore, any number of variations are possible with respect to the foregoing embodiment(s).

In a first exemplary variation, at time(s) that the aforementioned captured image(s) obtained as a result of scanning in a single image scanning run (i.e., image(s) including captured image(s) of printout(s) 336 and captured image(s) of master sheet(s) 337) is or are uploaded to center server machine 8, print server machine(s) 2 might detect difference(s) in color(s) between master sheet(s) 337 and printout(s) 336 and might upload only the results of such detection (hereinafter "color difference detection results") to center server machine 8. Center server machine 8 would, based on received color difference detection results, create new printer ICC profile(s) representing the current color space(s) of printer(s) 3A, 3B being investigated and would update corresponding printer ICC profile(s) within printer ICC profile database(s) 330.

Furthermore, in a second variation, print server machine(s) 2 might use the foregoing color difference detection results to create printer ICC profile(s) corresponding to print medium or media and printer(s) 3A, 3B being investigated, and might use created printer ICC profile(s) to update corresponding printer ICC profile(s) within prescribed folder(s) 39 (meaning that print server machine(s) 2 would not carry out the foregoing processing to upload captured image(s) and/or color difference detection results to center server machine 8).

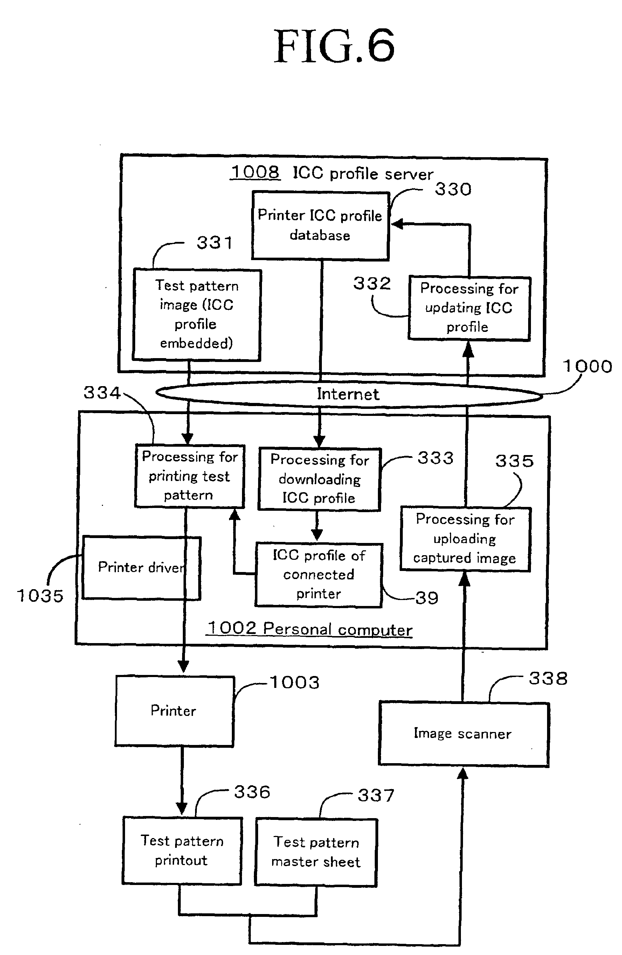

Furthermore, in a third variation, the foregoing printer ICC profile updating might be applied to printing system(s) intended for more-ordinary users rather than being limited to the foregoing commercial printing system(s) provided to photo studio(s). For example, as shown in FIG. 6, the foregoing printer ICC profile updating might be applied to printing system(s) comprising personal computer(s) 1002 to which image scanner(s) 338 is or are connected and which is or are capable of communicating with ICC profile server(s) 1008 by way of communication network(s) such as the Internet 1000, as well as printer(s) 1003 connected to personal computer(s) 1002. At the system shown in FIG. 6, personal computer 1002 possesses printer driver(s) 1035 as well as elements and/or functionalities 39 and 333 through 335 possessed by print server machine 2 in the system at FIG. 5, and ICC profile server 1008 possesses elements and/or functionalities 330 through 332 possessed by center server machine 8 in the system at FIG. 5. As a result, because it will be possible, even in the context of an ordinary printing system such as is shown in FIG. 6, to update printer ICC profile(s) in correspondence to changes occurring over time in printer(s) 1003 and the like, it will be possible to carry out printing in more satisfactory fashion than was the case conventionally. Note moreover that personal computer(s) 1002 may of course be provided with elements and/or functionalities 330 through 332 possessed by ICC profile server(s) 1008 in addition to the foregoing elements and/or functionalities 39 and 333 through 335 (that is, personal computer(s) 1002 might not carry out the foregoing processing to upload captured image(s) and/or color difference detection results to ICC profile server(s) 1008 but might create new printer ICC profile(s) based on captured image(s)).

Furthermore, other embodiments are possible.

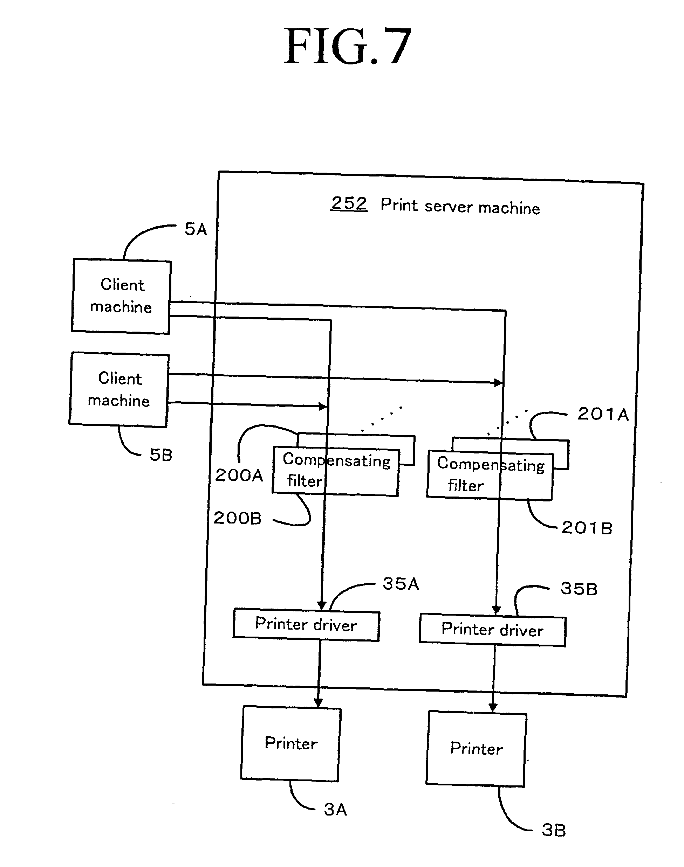

FIG. 7 shows a photo studio system associated with another embodiment of the present invention.

Present at print server machine(s) 225 of this other embodiment there are compensating filter(s) 200A, 200B, ... 201A, 201B, ... (hereinafter referred to as "compensating filter(s) 200"), corresponding to respective printer(s) 3A, 3B and to respective print media type(s) (e.g., plain paper, glossy paper, etc.), for compensating for change(s) in color space(s) (color characteristics) of printer(s) 3A, 3B occurring as a result of deterioration due to passage of time. Compensating filter(s) 200 is/are constituted so as to carry out specific processing (e.g., correction of color tone(s) in correspondence to current color space(s) of printer(s) 3A, 3B) on image data output by client machine(s) 5A, 5B. More specifically, compensating filter(s) 200 might, for example, be tone curve(s) for accepting input of respective pixel value(s) (e.g., intensity, brightness, and/or saturation) contained within image data output by client machine(s) 5A, 5B and respectively converting respective input pixel value(s) into prescribed value(s) which is/are then output (of course, compensating filter(s) 200 is/are not limited to tone curve(s) but may for example be n × n matrix determinant(s) for matrix operation(s) for correction of image data).

In this other embodiment, upon receiving image data from client machine(s) 5A, 5B, print server machine(s) 225 uses compensating filter(s) 200 corresponding to output destination printer(s) 3A and/or 3B and print media type(s) to apply specific filter processing to the received image data. Moreover, using printer driver(s) 35A and/or 35B corresponding to output destination printer(s) 3A and/or 3B, print server machine 225 employs printer ICC profile(s) corresponding to output destination printer(s) 3A, 3B and print media type(s) to carry out color matching on filter-processed image data, and prints the color-matched image data at printer(s) 3A and/or 3B.

In this other embodiment, change(s) in color space(s) of printer(s) occurring as a result of deterioration due to passage of time may be compensated not through use of printer ICC profile(s) but through use of compensating filter(s) 200. To this end, it is preferred that compensating filter(s) 200 be updated at regular intervals and/or whenever appropriate; for example, by means of procedure(s) such as the following.

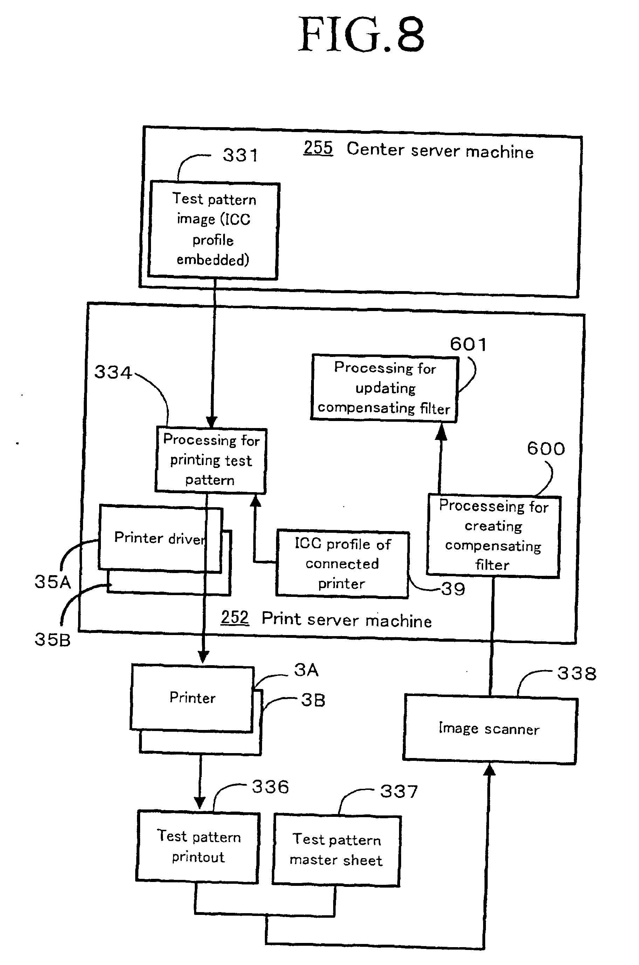

FIG. 8 shows functional constitution of print server machine 252 and center server machine 255 for updating compensating filter(s) 200. Processing flow to the point where compensating filter(s) 200 is/are updated will be described with reference to same FIG..

Just as was the case with updating of printer ICC profile(s), user(s) might at regular intervals or at desired time(s) (e.g., when ink(s) and/or print media are changed and/or replaced, when printout color(s) appear strange, etc.) first execute the aforementioned test pattern printing processing 334, which is installed at print server machine(s) 252, in order to investigate change(s) in printer color characteristics at printer(s) 3A, 3B. As a result, test pattern printout(s) 336 would be obtained from printer(s) 3A, 3B being investigated.

In addition, user(s) may place test pattern printout(s) 336 and preprepared test pattern master sheet(s) 337 next to each other on platen(s) of image scanner(s) 338, and may cause image scanner(s) 338 to scan such test pattern printout(s) 336 and master sheet(s) 337 in a single image scanning run. Image data captured from printout(s) 336 and master sheet(s) 337 which is output from image scanner 338 may be output to print server machine(s) 252.

Print server machine(s) 252 uses captured image data from image scanner(s) 338 to carry out compensating filter creation processing 600. During compensating filter creation processing 600, captured image data from image scanner 338 is analyzed and difference(s) in color(s) between test pattern printout(s) 336 and master sheet(s) 337 is/are detected (more specifically, histogram(s) of specific color component(s) (e.g., gray component(s)) might, for example, be respectively created for printout(s) 336 and master sheet(s) 337, comparison of respective histograms permitting detection of difference(s) in color(s) between printout(s) 336 and master sheet(s) 337). Moreover, based on results of such detection, new compensating filter(s) 200 corresponding to current color space(s) of printer(s) 3A, 3B being investigated is or are created; i.e., compensating filter(s) 200 for compensating for deterioration of printer(s) 3A, 3B over time (a specific example of which would be tone curve(s) adjusted so as to cause respective pixel value(s) in image data output from client machine(s) 5A, 5B to be converted to pixel value(s) such as will permit printing of correct color(s) (e.g., color(s) close to that or those desired by user(s)) is or are created. Note moreover that the compensating filter(s) created here do of course correspond to print media type(s) of test pattern printout(s) 336.

Following compensating filter creation processing 600, print server machine 252 carries out compensating filter updating processing 601. That is, print server machine 252 uses created new compensating filter(s) 200 to update existing compensating filter(s) corresponding to print media type(s) of printer(s) 336 and printer(s) 3A, 3B being investigated.

The foregoing is flow of processing in connection with updating of compensating filter(s) 200. Updating during updating of compensating filter(s) 200 may be carried out in similar fashion to the foregoing updating during updating of printer ICC profile(s).

To wit, test pattern printout(s) 336 might be sent, e.g., by mail, from studio(s) to center(s); new compensating filter(s) 200 might be created at center(s) based on results of colorimetry carried out on such printout(s) 336; and such new compensating filter(s) 200 might be input at center server machine(s) 255; downloading of same from center server machine(s) 255 to print server machine(s) 252 permitting updating of compensating filter(s) 200.

Furthermore, captured image(s) might be uploaded to center server machine(s) 252; center server machine(s) might carry out compensating filter creation processing 600; and new compensating filter(s) created as a result thereof might be downloaded, permitting updating of compensating filter(s).

Furthermore, such updating of compensating filter(s) might be carried out when new print media type(s) are added to the type(s) of print media available for use at printer(s) 3A and/or 3B, permitting compensating filter(s) 200 corresponding to newly added print media type(s) to be created and added to that or those available at print server machine(s) 252.

Furthermore, updating of compensating filter(s) may be carried out upon change(s) in manufacturing lot(s) of print media used at printer(s) 3A and/or 3B (i.e., compensating filter(s) 200 might be prepared so as to exhibit correspondence with respect not only to printer(s) 3A, 3B and print media type(s) but also with respect to manufacturing lot(s)).

Moreover, the foregoing first through third variations described in the context of updating of printer ICC profile(s) may also be applied in the context of the foregoing compensating filter updating processing.

Whereas a number of embodiments of the present invention have been described above, these have been presented as examples for purposes of describing the present invention and without intent to limit the scope of the present invention to these embodiments alone. The present invention may accordingly be carried out in the context of a wide variety of other embodiments without departing from the essence thereof.

## Claims

1. A printing system comprising:
one or more print means;
one or more storage units storing one or more print means color profiles representing one or more color spaces for at least one of the print means;
one or more control means accepting image data for printing, using at least one of the print means color profile or profiles stored in at least one of the storage unit or units to carry out color matching with respect to at least a portion of the image data for printing, and using at least a portion of the image data with respect to which color matching has been carried out to control at least one of the print means; and
one or more update means updating at least one of the print means color profile or profiles within at least one of the storage unit or units at regular intervals and/or whenever appropriate.

2. A printing system according to claim 1 further comprising:
one or more test pattern printing processing means accepting input of test pattern image data, at least a portion of the test pattern image data representing one or more test patterns, and providing at least a portion of the test pattern image data to at least one of the control means, at least a portion of the test pattern image data provided to at least one of the control means serving as at least a portion of the image data for printing; and
one or more color profile creating means creating at least one most-recent print means color profile representing at least one current color space of at least one of the print means based on one or more test pattern printouts output by at least one of the print means and/or information about at least one of the printout or printouts;
wherein at least one of the update means uses at least one of the created most-recent print means color profile or profiles to update at least one of the print means color profile or profiles within at least one of the storage unit or units.

3. A printing system according to claim 2 further comprising:
one or more test pattern master sheets on which at least one of the test pattern or patterns is printed with at least one accurate color; and
one or more image capturing means scanning at least one of the test pattern master sheet or sheets and at least one of the test pattern printout or printouts and creating captured image data corresponding to at least one of the test pattern master sheet or sheets and at least one of the test pattern printout or printouts;
wherein at least one of the color profile creating means creates at least one of the most-recent print means color profile or profiles based on at least one color of at least one of the test pattern master sheet or sheets and at least one color of at least one of the test pattern printout or printouts represented by at least a portion of the captured image data.

4. A printing system according to claim 2 comprising one or more user systems, and one or more server systems capable of communicating with at least one of the user system or systems;
wherein at least one of the user system or systems comprises at least one of the print means, at least one of the storage unit or units, at least one of the control means, at least one of the update means, and at least one of the test pattern printing processing means; and
wherein at least one of the server system or systems comprises at least one of the color profile creating means.

5. A server system capable of communicating by way of one or more communication networks with one or more user systems, the one or more user systems comprising
one or more print means;
one or more storage units storing one or more print means color profiles representing one or more color spaces for at least one of the print means;
one or more control means accepting image data for printing, using at least one of the print means color profile or profiles stored in at least one of the storage unit or units to carry out color matching with respect to at least a portion of the image data for printing, and using at least a portion of the image data with respect to which color matching has been carried out to control at least one of the print means; and
one or more update means updating at least one of the print means color profile or profiles within at least one of the storage unit or units at regular intervals and/or whenever appropriate,
the server system comprising:
one or more color profile creating means creating at least one most-recent print means color profile representing at least one current color space of at least one of the print means based on one or more image printouts output by at least one of the print means under the control of at least one of the control means and/or information about at least one of the printout or printouts; and
one or more sending means sending at least one of the created most-recent print means color profile or profiles to at least one of the user system or systems.

6. A user system capable of communicating by way of one or more communication networks with one or more server systems, the user system comprising:
one or more print means;
one or more storage units storing one or more print means color profiles representing one or more color spaces for at least one of the print means;
one or more control means accepting image data for printing, using at least one of the print means color profile or profiles stored in at least one of the storage unit or units to carry out color matching with respect to at least a portion of the image data for printing, and using at least a portion of the image data with respect to which color matching has been carried out to control at least one of the print means;
one or more receiving means receiving, from at least one of the server system or systems by way of at least one of the communication network or networks, one or more most-recent print means color profile representing at least one current color space of at least one of the print means, at least one of the most-recent print means color profile or profiles being created based on one or more image printouts output by at least one of the print means under the control of at least one of the print control means and/or information about at least one of the printout or printouts; and
one or more update means using at least one of the received most-recent print means color profile or profiles to update at least one of the print means color profile or profiles within at least one of the storage unit or units.

7. A method comprising:
one or more steps in which one or more print means color profiles representing one or more color spaces for one or more print means is or are stored;
one or more steps in which image data for printing is accepted, at least one of the print means color profile or profiles stored in at least one of the storage unit or units is used to carry out color matching with respect to at least a portion of the image data for printing, and at least a portion of the image data with respect to which color matching has been carried out is used to control at least one of the print means; and
one or more steps in which at least one of the print means color profile or profiles within at least one of the storage unit or units is updated at regular intervals and/or whenever appropriate.

8. A computer program capable of being made available to one or more printing systems comprising one or more print means, the computer program being capable of causing one or more computers to carry out:
one or more steps in which one or more print means color profiles representing one or more color spaces for at least one of the print means is or are stored;
one or more steps in which image data for printing is accepted, at least one of the print means color profile or profiles stored in at least one of the storage unit or units is used to carry out color matching with respect to at least a portion of the image data for printing, and at least a portion of the image data with respect to which color matching has been carried out is used to control at least one of the print means; and
one or more steps in which at least one of the print means color profile or profiles within at least one of the storage unit or units is updated at regular intervals and/or whenever appropriate.

9. A printing system comprising:
one or more print means;
one or more data sources outputting image data for printing;
one or more image filters accepting input thereto of at least a portion of the image data for printing output by at least one of the data source or sources, carrying out prescribed processing on at least a portion of the image data for printing input thereto, and outputting therefrom at least a portion of the image data for printing after the prescribed processing has been carried out thereon;
one or more storage units storing at least one of the image filter or filters;
one or more control means controlling at least one of the print means so as to print at least a portion of the image data for printing output by at least one of the image filter or filters; and
one or more update means updating at least one of the image filter or filters at regular intervals and/or whenever appropriate;
wherein at least one of the image filter or filters corresponds to at least one of the print means.

10. A printing system according to claim 9 further comprising:
one or more test pattern printing processing means accepting input of test pattern image data, at least a portion of the test pattern image data representing one or more test patterns, and providing at least a portion of the test pattern image data to at least one of the control means, at least a portion of the test pattern image data provided to at least one of the control means serving as at least a portion of the image data for printing; and
one or more filter creating means creating at least one most-recent image filter corresponding to at least one current color space of at least one of the print means based on one or more test pattern printouts output by at least one of the print means and/or information about at least one of the printout or printouts;
wherein at least one of the update means uses at least one of the created most-recent image filter or filters to update at least one of the image filter or filters within at least one of the storage unit or units.

11. A printing system according to claim 10 further comprising:
one or more test pattern master sheets on which at least one of the test pattern or patterns is printed with at least one accurate color; and
one or more image capturing means scanning at least one of the test pattern master sheet or sheets and at least one of the test pattern printout or printouts and creating captured image data corresponding to at least one of the test pattern master sheet or sheets and at least one of the test pattern printout or printouts;
wherein at least one of the filter creating means creates at least one of the most-recent image filter or filters based on at least one color of at least one of the test pattern master sheet or sheets and at least one color of at least one of the test pattern printout or printouts represented by at least a portion of the captured image data.

12. A method comprising:
one or more steps in which image data for printing output by one or more data sources outputting image data for printing is input, prescribed processing is carried out on at least a portion of the input image data for printing, and one or more image filters output after the prescribed processing has been carried out is or are stored;
one or more steps in which one or more print means is or are controlled so as to print at least a portion of the image data for printing output by at least one of the image filter or filters; and
one or more steps in which at least one of the image filter or filters is updated at regular intervals and/or whenever appropriate;
wherein at least one of the image filter or filters corresponds to at least one of the print means.

13. A computer program capable of being made available to one or more printing systems comprising one or more print means and one or more data sources outputting image data for printing, the computer program being capable of causing one or more computers to carry out:
one or more steps in which at least a portion of the image data for printing output by at least one of the data source or sources is input, prescribed processing is carried out on at least a portion of the input image data for printing, and one or more image filters output after the prescribed processing has been carried out is or are stored;
one or more steps in which at least one of the print means is controlled so as to print at least a portion of the image data for printing output by at least one of the image filter or filters; and
one or more steps in which at least one of the image filter or filters is updated at regular intervals and/or whenever appropriate.

14. A computer system comprising one or more image processing means carrying out specific image processing on image data input thereto, the system comprising:
one or more test pattern master sheets on which one or more test patterns is or are printed with at least one accurate color;
one or more image capturing means scanning at least one of the test pattern master sheet or sheets and one or more printouts of at least one of the test pattern or patterns, at least one of the test pattern master sheet or sheets and at least one of the test pattern printout or printouts being placed together on one or more platens, and creating captured image data in which included together there are results of capture for both at least one of the test pattern master sheet or sheets and at least one of the test pattern printout or printouts; and
one or more means employing at least a portion of the captured image data to control and/or adjust at least one of the image processing means.

15. A method capable of being used in the context of a computer system comprising one or more image processing means carrying out specific image processing on image data input thereto, the method comprising:
one or more steps in which one or more test pattern master sheets on which one or more test patterns is or are printed with at least one accurate color and one or more printouts of at least one of the test pattern or patterns are placed together on one or more platens, and at least one of the test pattern master sheet or sheets and at least one of the test pattern printout or printouts are scanned;
one or more steps in which captured image data is created, results of capture carried out in at least one of the scanning step or steps for both at least one of the test pattern master sheet or sheets and at least one of the test pattern printout or printouts being included in the captured image data; and
one or more steps in which at least a portion of the captured image data is employed to control and/or adjust at least one of the image processing means.
